# EUROPEAN PATENT SPECIFICATION

(11) **EP 3 433 132 B1**
(45) Date of publication and mention of the grant of the patent: **17.02.2021**
(21) Application number: 17769477.5
(22) Date of filing: 24.03.2017
(51) Int. Cl.: B60R 13/02

(54) **FLEXIBLE PLASTIC SNAP-RECEIVING SOCKET**
FLEXIBLE EINRASTSTECKDOSE AUS KUNSTSTOFF
DOUILLE DE RÉCEPTION À ENCLIQUETAGE EN PLASTIQUE SOUPLE

(30) Priority: 24.03.2016 CN 201610172133
(43) Date of publication of application: 30.01.2019
(73) Proprietor: Compagnie Plastic Omnium, 69007 Lyon (FR); Yanfeng Plastic Omnium Automotive Exterior Systems Co., Ltd., Shanghai 201805 (CN)
(72) Inventor: XIONG, Linhui, Shanghai 201805 (CN); MA, Zhongyu, Shanghai 201805 (CN); LI, Wufan, Shanghai 201805 (CN)
(74) Representative: LLR
(86) International application number: PCT/CN2017/078033
(87) International publication number: WO 2017/162200

(56) References cited:
- CN-A- 101 312 853
- CN-A- 105 370 677
- CN-A- 105 691 324
- CN-U- 202 187 983
- CN-U- 202 187 983
- CN-U- 204 340 912
- CN-U- 205 417 438
- DE-C2- 4 211 072
- US-A1- 2014 191 526
- US-B1- 6 276 109

## Description

### Technical Field

The present invention relates to installation of a vehicle outer panel, and more particularly to a flexible plastic snap-receiving socket. US6276109B1 discloses a flexible plastic snap-receiving socket according to the preamble of claim 1.

### Background Art

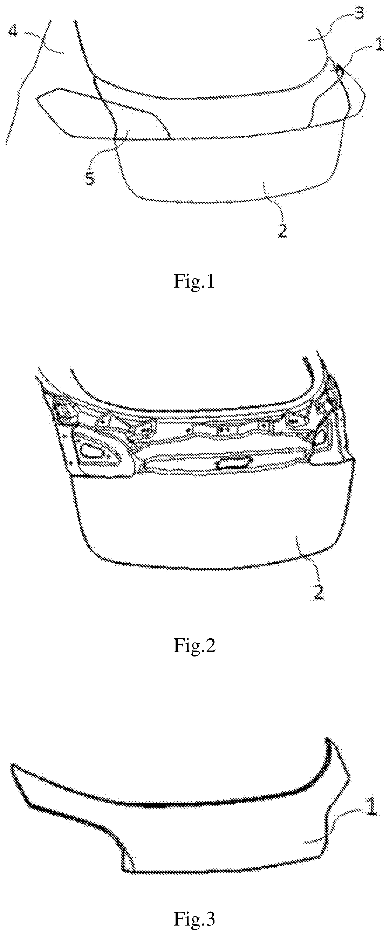

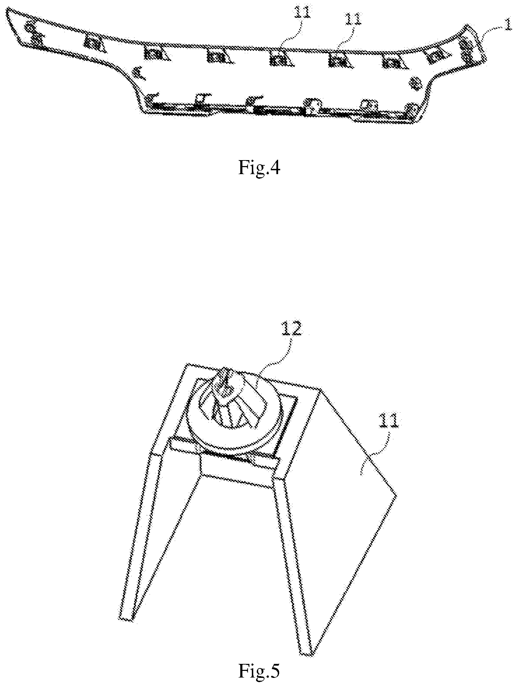

Fig. 1 is a schematic view illustrating the installation of a back door trim panel of a vehicle, wherein the vehicle back door trim panel 1 is mounted to a vehicle back door 2. Fig. 2 illustrates the structure of the vehicle back door 2, Figs. 3 and 4 illustrate the structure of the vehicle back door trim panel 1, and Fig. 5 illustrates the mounting structure of the vehicle back door trim panel 1 and the vehicle back door 2. In particular, the vehicle back door trim panel 1 is provided on the back with a plurality of plastic snap-receiving sockets 11 (e.g., seven plastic snap-receiving sockets are provided, as shown in Fig. 4), while the vehicle back door 2 is provided with a plurality of plastic snaps 12 in the corresponding position, so that the vehicle back door trim panel 1 is fixedly mounted onto the vehicle back door 2 by means of snap fitting between the plastic snaps 12 and the plastic snap-receiving sockets 11. Typically, since the vehicle back door trim panel 1 is made of a plastic material, whereas the vehicle back door 2 is made of a metallic material, the vehicle back door trim panel 1, in the installed state as shown in Fig. 1, will expand or contract in a high-temperature or low-temperature ambient environment. The difference of the two materials leads to the inconsistency of the stretching amount of the two parts, which in turn results in poor matching between the vehicle back door trim panel 1 and its peripheral parts such as a vehicle rear windshield 3 above the vehicle back door trim panel 1, a side panel 4 and a taillight 5 at the side of the vehicle back door trim panel 1, as shown in Fig. 1. To be specific, after the plastic snap 12 is fittingly engaged with the plastic snap-receiving socket 11, as shown in Fig. 5, the vehicle back door trim panel 1 generates internal stress due to contraction at a low-temperature state, thereby rendering the plastic snap-receiving socket broken at its root; and the vehicle back door trim panel 1 interferes with the side panel 4 and taillights 5 due to expansion at a high-temperature state, thereby rendering the appearance surface of a vehicle fluctuated.

### Summary of the Invention

To solve the problem in the prior art that the installation structure of a vehicle outer panel tends to cause a poor matching, the present invention is intended to provide a flexible plastic snap-receiving socket.

The flexible plastic snap-receiving socket according to the present invention comprises:
- a mounting panel (112),
- support legs (111), arranged to be spaced apart from each other, and
- a weakening structure (113),
wherein the support legs (111) are connected to the mounting panel (112) via the weakening structure (113), wherein the weakening structure (113) is an U-shaped weakening structure and comprises a bottom wall (113a) and a side wall (113b, 113c), wherein the side walls comprise a first side wall (113b) and a second side wall (113c), arranged to be opposite to each other, and two opposite ends of the bottom wall (113a) arc respectively connected with a bottom end of the first and second side walls (113b, 113c), wherein the support leg (111) is connected with a top end of the first side wall (113b), and the mounting panel (112) is connected with a top end of the second side wall (113c).

The weakening structure is a flexible structure, that is to say that the weakening structure is flexible compared to the other portions of the snap-receiving socket. In other words, the weakening structure has a lower resistance to deformation than the other portions of the snap-receiving socket for both extending so as to accompany the expansion of the outer panel at a high-temperature state and retracting / folding so as to accompany the contraction of the outer panel at a low-temperature state.

The flexible plastic snap-receiving socket is configured to be arranged on an outer panel of a vehicle and to receive a snap, being configured to be arranged on a structural part of the vehicle, for a snap-fit engagement, such that the outer panel can be fixed on the structural part of the vehicle.

According to the invention, the weakening structure is an U-shaped weakening structure and comprises a bottom wall and a side wall.

In a preferred embodiment, the support leg comprises a connecting structure on a lateral surface, through which the flexible plastic snap-receiving socket is connected with an outer panel of a vehicle.

In a preferred embodiment, the flexible plastic snap-receiving socket and the vehicle outer panel are formed in a one-piece structure.

According to the invention, the side walls comprise a first side wall and a second side wall, arranged to be opposite to each other, and the two opposite ends of the bottom wall are respectively connected with a bottom end of the first and second side walls.

According to the invention, the support leg is connected with a top end of the first side wall, and the mounting panel is connected with a top end of the second side wall.

In a preferred embodiment, the mounting panel comprises, at its center, a receiving aperture for receiving a plastic snap.

Advantageously, the mounting panel comprises a guiding slot communicating with the receiving aperture.

Advantageously, the guiding slot is a V-shaped slot.

In a preferred embodiment, the mounting panel is provided, on its top surface, with a position-limiting boss.

In a preferred embodiment, the wall thickness of the weakening structure is less than that of the mounting panel.

The flexible plastic snap-receiving socket provided by the present invention can match with the existing plastic snap, and realize an effective connection between a vehicle outer panel and a vehicle structural part. Moreover, in a high-temperature or low-temperature ambient environment, the flexible plastic snap-receiving socket provided by the present invention can ensure a good appearance matching between the vehicle outer panel and the vehicle structural part in an installed state.

### Brief Description of the Drawings

Fig. 1 is a schematic view illustrating an installation environment of a vehicle back door trim panel;
Fig. 2 is a schematic view of a vehicle back door;
Fig. 3 is a front schematic view of a vehicle back door trim panel;
Fig. 4 is a back schematic view of a vehicle back door trim panel;
Fig. 5 is a perspective schematic view of a prior art installation structure;
Fig. 6 is a perspective schematic view of an installation structure according to the present invention;
Fig. 7 is an exploded view of Fig. 6; and
Fig. 8 is a structural schematic view of a flexible plastic snap-receiving socket according to the present invention.

### Detailed Description of the Preferred Embodiments

The preferred embodiments of the present invention will be provided and described in detail with reference to the drawings.

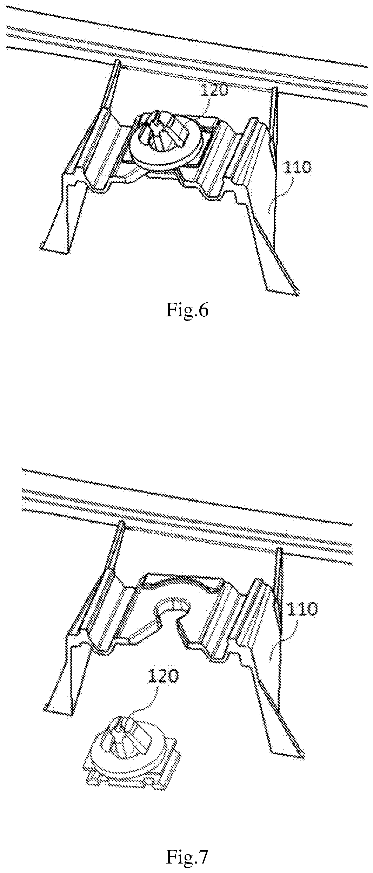

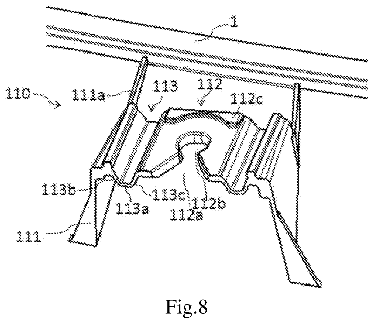

Figs. 6 and 7 illustrate the installation structure according to the present invention, and Fig. 8 illustrates a flexible plastic snap-receiving socket 110 of the installation structure. Similar to the prior art, a vehicle back door trim panel 1 is provided on the back with a plurality of flexible plastic snap-receiving sockets 110, while a vehicle back door 2 is provided with a plurality of plastic snaps 120 in the corresponding position, so that the vehicle back door trim panel 1 is fixedly mounted onto the vehicle back door 2 by means of snap fit between the plastic snaps 120 and the flexible plastic snap-receiving sockets 110, wherein the plastic snap 120 is completely identical with the prior-art plastic snap 12 (see Fig. 5), and they are also identical in terms of the way to slide into the plastic snap-receiving socket, which will not be reiterated herein.

Different from the prior art, the flexible plastic snap-receiving socket 110 provided by the present invention is connected with the vehicle back door trim panel 1 only by two support legs 111. To be specific, the flexible plastic snap-receiving socket 110 comprises two support legs 111, arranged to be spaced apart from each other, and two opposite ends of a mounting panel 112 are respectively connected to a top end of the support legs 111 via a weakening structure 113. The support leg 111 has a connecting structure 111a on a lateral surface, through which the flexible plastic snap-receiving socket 110 and the vehicle back door trim panel 1 integrally form one piece, thereby reducing the cost of the vehicle back door trim panel 1. The weakening structure 113 is shown as a U-shaped weakening structure comprising a bottom wall 113a, a first side wall 113b and a second side wall 113c, arranged be opposite to each other. Two opposite ends of the bottom wall 113a are respectively connected with a bottom end of the first and second side walls 113b, 113c. The support leg 111 is connected with a top end of the first side wall 113b, and the mounting panel 112 is connected with a top end of the second side wall 113c. The mounting panel 112 has a guiding slot 112a and a receiving aperture 112b which is in communication with the guiding slot 112a, so as to guide the plastic snap 120 (see Fig. 7) to enter into the receiving aperture 112b along the V-shaped guiding slot 112a, thereby allowing the snap engagement between the plastic snap 120 and the flexible plastic snap-receiving socket 110. Moreover, the mounting panel 112 is also provided on its top surface with a boss 112c, which forms a position-limiting part to the plastic snap 120, thereby helping to ensure that the plastic snap 120 is assembled in position. In the embodiment, the wall thickness of the weakening structure 113 (the bottom wall 113a and side walls 113b, 113c) is less than that of the mounting panel 112, thereby facilitating deformation under stress.

The flexible plastic snap-receiving socket 110 provided by the present invention can match with the current plastic snap to realize an effective connection between the vehicle back door trim panel 1 and the vehicle back door 2. Since the flexible plastic snap-receiving socket 110 provided by the present invention is connected with the vehicle back door trim panel 1 only by two support legs 111, and the two opposite ends of the mounting panel 112 are respectively connected to the support legs 111 via the weakening structure 113, the poor matching problem of the installation structure of the vehicle back door trim panel can be solved. To be specific, at a low-temperature state, the internal stress, resulting from the contraction of the vehicle back door trim panel 1, will be buffered by the weakening structure 113, thus will not be completely transmitted to the flexible plastic snap-receiving socket 110, thereby avoiding the fracture risk of the flexible plastic snap-receiving socket 110, and meanwhile marks due to contraction on the corresponding outer surface of the flexible plastic snap-receiving socket 110. At a high-temperature state, the weakening structure 113 tends to extend itself so as to accompany the expansion of the vehicle back door trim panel 1, thereby avoiding ripples on a vehicle outer surface. As a result, the flexible plastic snap-receiving socket 110 provided by the present invention can realize effective connection and meanwhile guarantee good appearance matching. In other words, the weakening structure 113 tends to extend itself so as to accompany the expansion of the outer panel 1, which is very different from the expansion of the structural part 2, and thus to compensate the differential of expansion. Accordingly, this differential of expansion has no negative effect on the appearance of the outer panel 1.

## Claims

1. A flexible plastic snap-receiving socket (110), comprising
- a mounting panel (112), and
- support legs (111), arranged to be spaced apart from each other,
**characterized in that** the flexible plastic snap-receiving socket further comprises a weakening structure (113),
wherein the support legs (111) are connected to the mounting panel (112) via the weakening structure (113),
wherein the weakening structure (113) is an U-shaped weakening structure and comprises a bottom wall (113a) and a side wall (113b, 113c),
wherein the side walls comprise a first side wall (113b) and a second side wall (113c), arranged to be opposite to each other, and two opposite ends of the bottom wall (113a) are respectively connected with a bottom end of the first and second side walls (113b, 113c),
wherein the support leg (111) is connected with a top end of the first side wall (113b), and the mounting panel (112) is connected with a top end of the second side wall (113c).

2. The flexible plastic snap-receiving socket (110) according to the previous claim, wherein the weakening structure (113) is flexible compared to the other portions of the snap-receiving socket.

3. The flexible plastic snap-receiving socket (110) according to any one of the previous claims, wherein the flexible plastic snap-receiving socket is configured to be arranged on an outer panel (1) of a vehicle and to receive a snap (120), the snap (120) being configured to be arranged on a structural part (2) of the vehicle, for a snap-fit engagement, such that the outer panel (1) can be fixed on the structural part (2) of the vehicle.

4. The flexible plastic snap-receiving socket (110) according to the previous claim, wherein the outer panel (1) is a vehicle back door trim panel, and the structural part (2) is a vehicle back door.

5. The flexible plastic snap-receiving socket (110) according to any one of the previous claims, wherein the support leg (111) comprises a connecting structure (111a) on a lateral surface, through which the flexible plastic snap-receiving socket (110) is connected with an outer panel (1) of a vehicle.

6. The flexible plastic snap-receiving socket (110) according to any one of the previous claims, wherein the flexible plastic snap-receiving socket (110) and the outer panel (1) are formed in a one-piece structure.

7. The flexible plastic snap-receiving socket (110) according to any one of the previous claims, wherein the mounting panel (112) comprises, at its center, a receiving aperture (112b) for receiving a plastic snap (120).

8. The flexible plastic snap-receiving socket (110) according to the previous claim, wherein the mounting panel (112) comprises a guiding slot (112a), communicating with the receiving aperture (112b).

9. The flexible plastic snap-receiving socket (110) according to the previous claim, wherein the guiding slot (112a) is a V-shaped slot.

10. The flexible plastic snap-receiving socket (110) according to any one of the previous claims, wherein the mounting panel (112) is provided, on its top surface, with a position-limiting boss (112c).

11. The flexible plastic snap-receiving socket (110) according to any one of the previous claims, wherein the wall thickness of the weakening structure (113) is less than that of the mounting panel (112).

## Patentansprüche

1. Ein flexibler Kunststoff-Schnappaufnahmesockel (110), umfassend
- eine Montageplatte (112), und
- Stützbeine (111), die so angeordnet sind, dass sie voneinander beabstandet sind, **dadurch gekennzeichnet, dass** der flexible Kunststoff-Schnappaufnahmesockel ferner eine Schwächungsstruktur (113) aufweist,
wobei die Stützbeine (111) über die Schwächungsstruktur (113) mit der Montageplatte (112) verbunden sind,
wobei die Schwächungsstruktur (113) eine U-förmige Schwächungsstruktur ist und
eine Bodenwand (113a) und eine Seitenwand (113b, 113c) umfasst,
wobei die Seitenwände eine erste Seitenwand (113b) und eine zweite Seitenwand (113c) umfassen, die einander gegenüberliegend angeordnet sind, und zwei gegenüberliegende Enden der unteren
Bodenwand (113a) jeweils mit einem unteren Ende der ersten und zweiten Seitenwand (113b, 113c) verbunden sind,
wobei das Stützbein (111) mit einem oberen Ende der ersten Seitenwand (113b) verbunden ist, und die Montageplatte (112) mit einem oberen Ende der zweiten Seitenwand (113c) verbunden ist.

2. Der flexible Kunststoff-Schnappaufnahmesockel (110) nach dem vorhergehenden Anspruch, wobei die Schwächungsstruktur (113) im Vergleich zu den anderen Teilen des Schnappaufnahmesockels flexibel ist.

3. Der flexible Kunststoff-Schnappaufnahmesockel (110) nach einem der vorangegangenen Ansprüche, wobei der flexible Kunststoff-Schnappaufnahmesockel so konfiguriert ist, dass dieser an einer Außenverkleidung (1) eines Fahrzeugs angeordnet ist und einen Schnappverschluss (120) aufnimmt, wobei der Schnappverschluss (120) zur Anordnung an einem Strukturteil (2) des Fahrzeugs, für einen Schnapp-Eingriff, ausgebildet ist, so dass die Außenverkleidung (1) an dem Strukturteil (2) des Fahrzeugs befestigt werden kann.

4. Der flexible Kunststoff-Schnappaufnahmesockel (110) nach einem der vorangegangenen Ansprüche, wobei die Außenverkleidung (1) eine Fahrzeug-Hintertürverkleidung ist, und das Strukturteil (2) eine Fahrzeug-Hintertür ist.

5. Der flexible Kunststoff-Schnappaufnahmesockel (110) nach einem der vorhergehenden Ansprüche, wobei das Stützbein (111) eine Verbindungsstruktur (111a) an einer Seitenfläche aufweist, durch die der flexible Kunststoff-Schnappaufnahmesockel (110) mit einer Außenverkleidung (1) eines Fahrzeugs verbunden ist.

6. Der flexible Kunststoff-Schnappaufnahmesockel (110) nach einem der vorhergehenden Ansprüche, wobei der flexible Kunststoff-Schnappaufnahmesockel (110) und die Außenverkleidung (1) in einer einteiligen Struktur ausgebildet sind.

7. Der flexible Kunststoff-Schnappaufnahmesockel (110) nach einem der vorhergehenden Ansprüche, wobei die Montageplatte (112) in ihrer Mitte eine Aufnahmeöffnung (112b) zum Aufnehmen eines Kunststoff Schnappverschluss (120).

8. Der flexible Kunststoff-Schnappaufnahmesockel (110) nach dem vorherigen Anspruch, wobei die Montageplatte (112) einen Führungsschlitz (112a) umfasst, der mit der Aufnahmeöffnung (112b) in Verbindung steht.

9. Der flexible Kunststoff-Schnappaufnahmesockel (110) nach dem vorherigen Anspruch, wobei der Führungsschlitz (112a) ein V-förmiger Schlitz ist.

10. Der flexible Kunststoff-Schnappaufnahmesockel (110) nach einem der vorhergehenden Ansprüche, wobei die Montageplatte (112) auf ihrer Oberseite mit einem positionsbegrenzenden Vorsprung (112c) versehen ist.

11. Der flexible Kunststoff-Schnappaufnahmesockel (110) nach einem der vorhergehenden Ansprüche, wobei die Wandstärke der Schwächungsstruktur (113) geringer ist, als die der Montageplatte (112).

## Revendications

1. Une douille (110) en matière plastique souple, de réception avec encliquetage, comprenant
- un panneau de montage (112), et
- des jambages de support (111), agencés de façon à être espacés les uns des autres,
**caractérisée en ce que** la douille en matière plastique souple, de réception avec encliquetage, comprend en outre une structure d'affaiblissement (113),
les jambages de support (111) étant reliés au panneau de montage (112) via la structure d'affaiblissement (113),
la structure d'affaiblissement (113) étant une structure d'affaiblissement en forme de U et comprenant une paroi inférieure (113a) et une paroi latérale (113b, 113c), les parois latérales comprenant une première paroi latérale (113b) et une deuxième paroi latérale (113c), agencées de façon à être opposées l'une à l'autre, et deux extrémités opposées de la paroi inférieure (113a) sont respectivement reliées à une extrémité inférieure des première et deuxième parois latérales (113b, 113c),
le jambage de support (111) étant connecté à une extrémité supérieure de la première paroi latérale (113b), et le panneau de montage (112) est connecté à une extrémité supérieure de la deuxième paroi latérale (113c).

2. La douille (110) en matière plastique souple, de réception avec encliquetage, selon la revendication précédente, dans laquelle la structure d'affaiblissement (113) est flexible par rapport aux autres parties de la douille de réception avec encliquetage.

3. La douille (110) en matière plastique souple, de réception avec encliquetage, selon l'une quelconque des revendications précédentes, dans laquelle la douille en matière plastique souple, de réception avec encliquetage, est configurée pour être agencée sur un panneau extérieur (1) d'un véhicule et pour recevoir un organe (120) à encliquetage, l'organe (120) à encliquetage étant configuré pour être agencé sur une partie structurelle (2) du véhicule, pour un engagement par encliquetage, de sorte que le panneau extérieur (1) puisse être fixé sur la partie structurelle (2) du véhicule.

4. La douille (110) en matière plastique souple, de réception avec encliquetage, selon la revendication précédente, dans laquelle le panneau extérieur (1) est un panneau de garniture de porte arrière de véhicule, et la partie structurelle (2) est une porte arrière de véhicule.

5. La douille (110) en matière plastique souple, de réception avec encliquetage, selon l'une quelconque des revendications précédentes, dans laquelle le jambage de support (111) comprend une structure de liaison (111a) sur une surface latérale, au moyen de laquelle la douille (110) en matière plastique souple, de réception avec encliquetage, est reliée à un panneau extérieur (1) d'un véhicule.

6. La douille (110) en matière plastique souple, de réception avec encliquetage, selon l'une quelconque des revendications précédentes, dans laquelle la douille (110) en matière plastique souple, de réception avec encliquetage, et le panneau extérieur (1) sont formés selon une structure monobloc.

7. La douille (110) en matière plastique souple, de réception avec encliquetage, selon l'une quelconque des revendications précédentes, dans laquelle le panneau de montage (112) comprend, en son centre, une ouverture de réception (112b) pour recevoir un organe à encliquetage (120) en matière plastique.

8. La douille (110) en matière plastique souple, de réception avec encliquetage, selon la revendication précédente, dans laquelle le panneau de montage (112) comprend une fente de guidage (112a), communiquant avec l'ouverture de réception (112b).

9. La douille (110) en matière plastique souple, de réception avec encliquetage, selon la revendication précédente, dans laquelle la fente de guidage (112a) est une fente en forme de V.

10. La douille (110) en matière plastique souple, de réception avec encliquetage, selon l'une quelconque des revendications précédentes, dans laquelle le panneau de montage (112) est pourvu, sur sa surface supérieure, d'un bossage (112c) de limitation de position.

11. La douille (110) en matière plastique souple, de réception avec encliquetage, selon l'une quelconque des revendications précédentes, dans laquelle l'épaisseur de paroi de la structure d'affaiblissement (113) est inférieure à celle du panneau de montage (112).
